# EUROPÄISCHE PATENTSCHRIFT

(11) **EP 1 993 858 B1**
(45) Veröffentlichungstag und Bekanntmachung des Hinweises auf die Patenterteilung: **13.01.2010**
(21) Anmeldenummer: 07711472.6
(22) Anmeldetag: 09.02.2007
(51) Int. Cl.: B60G 11/48, B60G 15/06, B60G 17/02

(54) **FEDERUNGSSYSTEM FÜR EINE FAHRZEUG-RADAUFHÄNGUNG**
SPRING SYSTEM FOR A VEHICLE WHEEL SUSPENSION SYSTEM
SYSTEME DE SUSPENSION POUR UNE SUSPENSION DE ROUE DE VEHICULE

(30) Priorität: 15.03.2006 DE 102006011856
(43) Veröffentlichungstag der Anmeldung: 26.11.2008
(73) Patentinhaber: Bayerische Motoren Werke Aktiengesellschaft, 80809 München (DE)
(72) Erfinder: PRUCKNER, Alfred, 81545 München (DE)
(86) Internationale Anmeldenummer: PCT/EP2007/001100
(87) Internationale Veröffentlichungsnummer: WO 2007/104393

(56) Entgegenhaltungen:
- EP-A- 1 577 125
- DE-A1- 19 935 865
- US-A- 2 301 742
- US-A- 3 966 223

## Beschreibung

Die Erfindung betrifft ein Federungssystem für eine Fahrzeug-Radaufhängung mit einem ersten letztlich zwischen dem Fahrzeug-Aufbau und einem Fahrzeug-Rad eingespannten Federelement und einem zweiten oder weiteren, durch Einleiten einer Kraft oder eines Moments mittels eines mechanischen Spannelements letztlich zwischen dem Fahrzeug-Aufbau und dem Fahrzeug-Rad einspannbaren Federelement, das somit dem ersten Federelement parallel geschaltet werden kann, während dieses weitere Federelement ohne in das System eingeleitete Kraft oder eingeleitetes Moment nicht aktiv ist, und weiterhin mit einem Druck-Zusatzfederelement, das bei großen Federwegen des ersten Federelements über einen Anschlag aktiv oder zugeschaltet wird. Zum bekannten Stand der Technik wird neben der EP 1 577 125 A auf die DE 41 04 904 A1 sowie auf die DE 33 23 026 A1 verwiesen.

Fahrwerke von Kraftfahrzeugen können nach unterschiedlichen Philosophien ausgelegt werden. Komfortabel ausgelegte Fahrwerke von Personenkraftwagen sind relativ weich, sportlicher ausgelegte Fahrwerke relativ hart. Neben der unterschiedlichen Philosophie der einzelnen Hersteller von Automobilen bzw. Personenkraftwagen kann bei einigen Fahrzeugen als Sonderausstattung ein "sportliches Fahrwerk" gewählt werden. Um diese Wahl im jeweiligen Fahrzeug variabel zu gestalten, bieten einige Hersteller sog. Verstelldämpfer an, mit welchen der Fahrer zwischen einer komfortablen und einer sportlichen Dämpferabstimmung wählen kann. Dabei nimmt diese unterschiedliche Dämpfereinstellung zwar subjektiv Einfluss auf das Empfinden des Fahrers, objektiv ist jedoch keine Verbesserung bezüglich eines sportlicheren Fahrverhaltens bei harter Dämpfung zu erreichen. Eine Verstellmöglichkeit der Federrate(n) wäre hier günstiger.

Letzteres ist für Fahrzeuge grundsätzlich bekannt, vgl. beispielsweise die oben zweitgenannte Schrift, die ein allerdings relativ aufwändiges regelbares Federungssystem für Radaufhängungen an Kraftfahrzeugen zeigt. Demgegenüber einfacher ist ein in der eingangs erstgenannten EP 1 577 125 A beschriebenes variables Federungssystem für ein Kfz mit mindestens einem Hauptfederelement und mindestens einem Dämpferelement. Das Hauptfederelement besteht aus einer Tragfeder und wie üblich aus einer Druckzusatzfeder sowie einer Zuganschlagfeder. Daneben ist ein zweites Federelement vorgesehen, das dem Hauptfederelement entgegen wirkt bzw. entgegenwirken kann und hierfür über ein Verstellsystem wahlweise in Wirkung gebracht werden kann, wobei das in Eingriff gebrachte zweite Federelement eine Federratenverstärkung durch einen vorzeitigen Eingriff der in Einfederrichtung vorhandenen Druckzusatzfeder und eine Tieferlegung des Kraftfahrzeugs bewirkt. Nach diesem bekannten Stand der Technik muss also die Druckzusatzfeder stets in Eingriff sein, wenn eine vergrößerte Federrate erwünscht ist. Da jedoch eine Druckzusatzfeder auch als Anschlag zur Begrenzung des Federwegs der Tragfeder dient, ist die Federrate der Druckzusatzfeder relativ hoch, d.h. der Betrag von deren Federrate ist relativ groß und diese Druckzusatzfeder somit relativ hart. Wenn diese Druckzusatzfeder bei tiefer gelegtem Fahrzeug aber stets in Eingriff ist, so liegt ein äußerst hartes und folglich unkomfortables Fahrwerk vor.

Mit der vorliegende Erfindung soll nun ein ähnliches Federungssystem (wie das aus der EP 1 577 125 A bekannte) aufgezeigt werden, mit dem jedoch ein weicheres und somit komfortableres Fahrwerk darstellbar ist (= Aufgabe der Erfindung). Die Lösung dieser Aufgabe ist für ein Federungssystem einer Fahrzeug-Radaufhängung nach dem Oberbegriff des Anspruchs 1 dadurch gekennzeichnet, dass das Einleiten der Kraft oder des Moments zum Aktivieren des zweiten oder weiteren Federelements das Druck-Zusatzfederelement nicht aktiviert, entweder indem die Federrate des zweiten oder weiteren Federelements geringer ist als die Federrate des ersten Federelements, oder indem die Federrate des zweiten oder weiteren Federelements derart gewählt ist, dass das aktive zweite oder weitere Federelement bei einem Einfedern des Aufbaus gegenüber dem Rad zumindest solange aktiv bleibt, bis das Druck-Zusatzfederelement aktiv ist.

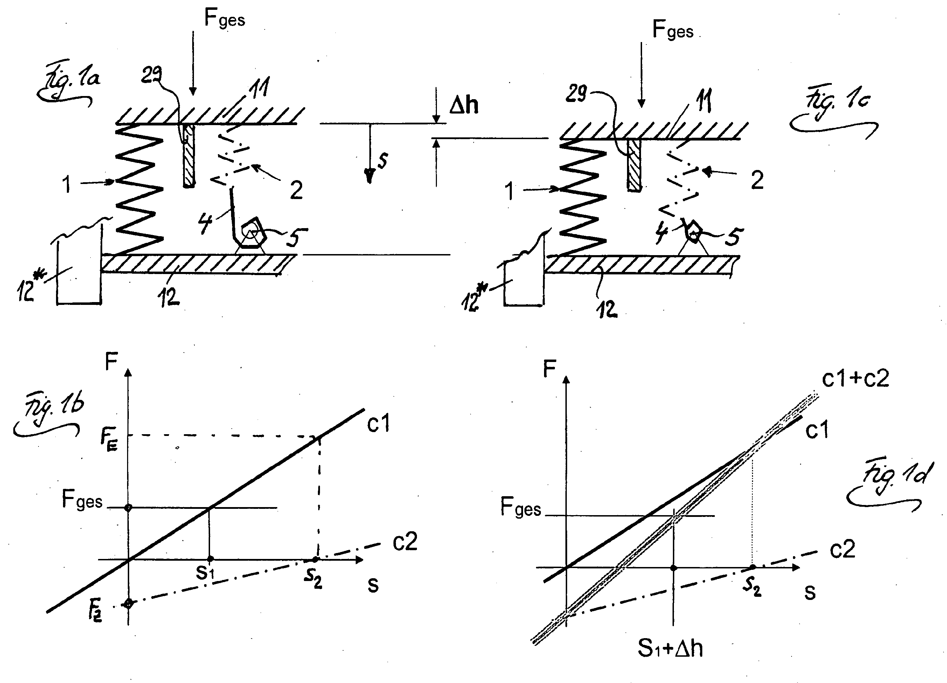

Grundsätzlich ist bekannt, dass sich dann, wenn zwei oder mehrere Federelemente parallel zwischen zwei Bauteilen wirken, die wirksame Gesamtfederrate aus der Summe der Teilfederraten zusammensetzt. Durch Zuschalten eines oder mehrerer weiterer Federelemente zu einem ersten Federelement kann somit die wirksame Gesamt-Federrate variiert werden. In einem Fahrwerk bzw. einer Radaufhängung eines Fahrzeugs kann somit der üblichen Tragfeder, die hier als erstes Federelement bezeichnet wird, ein zweites oder weiteres Federelement parallel geschaltet werden, um die Härte des Fahrwerks zu variieren. Dies ist grundsätzlich bekannt und so auch im genannten bekannten Stand der Technik umgesetzt. Beim genannten Stand der Technik nach der EP 1 577 125 A handelt es sich bei dem zuschaltbaren zweiten und weiteren Federelement um die dort sog. Druckzusatzfeder, die in den Figuren 1a, 1b dieser genannten Schrift die Bezugsziffer 16 trägt, in Verbindung mit dem dort der sog. Tragfeder entgegen wirkenden zweiten Federelement, welches in den Figuren 1a, 1b dieser genannten Schrift die Bezugsziffer 18 trägt.

Mit der vorliegenden Erfindung wurde jedoch erkannt, dass es nicht erforderlich ist, die Druckzusatzfeder nach der EP 1 577 125 A, die vorliegend als Druck-Zusatzfederelement bezeichnet wird, in Eingriff zu bringen. Vielmehr ist es zur Veränderung der Federrate ausreichend, wenn alleine ein zweites oder weiteres Federelement, welches in der genannten EP 1 577 125 A ebenfalls vorhanden ist, zugeschaltet, d.h. letztlich zwischen dem Fahrzeug-Rad und dem Fahrzeug-Aufbau eingespannt wird, zwischen denen bereits ein erstes als Druckfeder ausgebildetes Federelement als sog. Tragfeder eingespannt ist. Dabei muss das zweite Federelement keineswegs als Druckfeder wirken, sondern es kann das zweite Federelement durchaus auch als Zugfeder wirken, die mit einer mechanischen Spannvorrichtung zwischen dem Fzg.-Rad und dem Fzg.-Aufbau eingespannt wird.

Dies wird im folgenden anhand der beigefügten **Figuren 1a -1d** näher erläutert. In den weiteren an späterer Stelle erläuterten **Figuren 2a - 2c, 3a - 3c** sind verschiedene Ausführungsbeispiele prinzipiell dargestellt.

**Fig.1a** zeigt ein zwischen zwei nur abstrakt dargestellten Bauteilen, bei denen es sich konkret um einen das Rad 12* (genauer dessen Radträger) eines zweispurigen Fahrzeugs führenden unteren Querlenker 12 (ein solcher ist dem Fachmann bekannt) und um den Aufbau 11 des Fahrzeugs handelt bzw. handeln kann, stets eingespanntes erstes Federelement 1, das als Schrauben-Druckfeder ausgebildet ist und als Tragfeder für den Aufbau 11 gegenüber dem Rad 12* fungiert und somit letztlich zwischen Aufbau 11 und Rad 12* eingespannt ist. Neben diesem ersten Federelement 1 kann mittels einer mechanischen Spannvorrichtung, die hier aus einem flexiblen Zugmittel 4 besteht, das auf einer Rolle 5 aufgewickelt oder von dieser abgewickelt werden kann, ein zweites Federelement 2 zwischen diesen Bauteilen, d.h. zwischen dem Querlenker 12 (bzw. letztlich dem Rad 12*) und dem Aufbau 11 eingespannt werden. Hierfür ist die Rolle 5 an einem der beiden Bauteile, hier bspw. am Querlenker 12, befestigt, während das freie Ende des mit seinem anderen Ende auf der Rolle 5 befestigten und weiterhin auf dieser Rolle 5 aufwickelbaren Zugmittels 4 mit dem ersten Ende des zweiten Federelements 2, das mit seinem anderen Ende am anderen der beiden Bauteile, nämlich hier am Aufbau 11 befestigt ist, verbunden ist.

Im Zustand gemäß **Fig.1a** ist das flexible Zugmittel 4 soweit von der Rolle 5 abgewickelt, dass das Zugmittel 4 schlaff zwischen der Rolle 5 und dem zweiten Federelement 2 hängt, so dass letzteres also nicht zwischen den beiden Bauteilen 11, 12, d.h. zwischen dem Aufbau 11 und dem Querlenker 12 eingespannt ist. Im Zustand nach **Fig.1c** hingegen ist das flexible Zugmittel 4 soweit auf der Rolle 5 aufgewickelt, dass das zweite - hier ebenfalls als Schraubenfeder ausgebildete - Federelement 2 als Zugfeder wirkend zwischen dem Aufbau 11 und dem Querlenker 12 eingespannt ist.

In den beiden **Figuren 1a, 1c** ist ferner ein dem Fachmann bekanntes Druck-Zusatzfederelement 29 dargestellt, das nur bei relativ großen Federwegen der Tragfeder, d.h. des ersten Federelements 1 zum Einsatz kommt. Dieses Druck-Zusatzfederelement 29 ist vorzugsweise am Fzg.-Aufbau 11 befestigt. Wenn das Rad 12* soweit gegenüber dem Aufbau 11 einfedert, dass hier der Querlenker 12 - in der Realität jedoch ein mit dem Querlenker 12 verbundenes Bauelement eines hier nicht dargestellten und dem ersten Federelement 1 parallel geschalteten Dämpfers - am Druck-Zusatzfederelement 29 zum Anliegen kommt, so kommt auch dieses Druck-Zusatzfederelement 29 zur Wirkung. Ausdrücklich ist jedoch weder im Zustand nach **Fig.1a****,** noch im Zustand nach **Fig.1c**, die beide den Ruhezustand des Fahrzeugs darstellen bzw. einen Zustand, in dem der Aufbau 11 nicht übermäßig gegenüber dem Rad 12* eingefedert oder ausgefedert ist, d.h. in dem kein extrem großer Federweg des ersten Federelements 1 vorliegt, das Druck-Zusatzfederelement 29 aktiv. Mit Ausnahme großer Federwege des ersten Federelements 1 ist das Druck-Zusatzfederelement 29 weder bei zwischen Aufbau 11 und Rad 12* nicht eingespanntem noch bei eingespanntem zweiten Federelement 2 ausdrücklich nicht wirksam.

Die bereits genannte Rolle 5 kann mittels eines hier nicht dargestellten Stellmotors in der einen oder in der anderen Drehrichtung in Rotation versetzt werden, um das freie Trum des Zugmittels 4 (hierbei handelt es sich um den zwischen dem Federelement 2 und der Rolle 5 befindlichen Abschnitt) schlaff oder schlapp zu halten, so wie dies in **Fig.1a** dargestellt ist, oder gespannt oder stramm zu halten, so wie dies in **Fig.1c** dargestellt ist. Dabei ist die Auslegung vorzugsweise so getroffen, dass beim Zustand nach **Fig.1a** das zweite Federelement 2 stets unwirksam ist, d.h. ohne jeden Einfluss bleibt, und zwar nicht nur dann, wenn das erste Federelement 1 weiter komprimiert und somit der Fzg.-Aufbau 11 zum Rad 12* hin bewegt wird, sondern auch dann, wenn sich das Rad 12* weiter vom Aufbau 11 weg bewegt.

Beim Zustand nach **Fig.1c** hingegen sei das zweite Federelement 2 durch das gespannte Zugmittel 4 vorzugsweise so weit gespannt, dass selbst bei einer weiteren Bewegung des Fzg.-Aufbaus 11 zum Rad 12* hin und somit bei einer weiteren Komprimierung des ersten Federelements 1 nicht nur das Zugmittel 4, sondern auch das zweite Federelement 2 stets gespannt bleibt und somit zusätzlich zum ersten Federelement 1 voll wirksam ist und bleibt. In diesem Zustand nach **Fig.1c** ist im übrigen, wie durch den Höhenvergleich (Δh) hervorgeht, der Fzg.-Aufbau 11 zum Rad 12 (bzw. folglich auch zur Fahrbahn hin) abgesenkt, und zwar durch entsprechendes Verkürzen des freien Trums des Zugmittels 4. Durch die Spannung des Zugmittels 4 ist somit die Distanz zwischen den zu federnden Bauteilen 11, 12 veränderbar. Dabei sei darauf hingewiesen, dass hier zwar von einem Aufwickeln oder Abwickeln des Zugmittels 4 gesprochen wurde, dass jedoch dies auch verallgemeinert im Sinne einer andersartigen Verkürzung oder Verlängerung des Zugmittels 4 realisiert bzw. betrachtet werden kann.

Ohne dass - wie bereits erwähnt wurde - das Druck-Zusatzfederelement 29 wirksam wird, liegt beim Zustand nach **Fig.1c** ein härteres Fahrwerk vor als beim Zustand nach **Fig.1a****,** da im Zustand nach **Fig.1c** das dem ersten als Druckfeder wirkenden Federelement 1 entgegengerichtet und somit als Zugfeder wirkende zweite Federelement 2 aktiv ist. Trotz der dem ersten Federelement 1 entgegen wirkenden Kraftrichtung des zweiten Federelements 2 stellt sich nämlich im Zustand nach **Fig.1c** eine höhere Federrate des aktiven Federungssystems, das durch das erste Federelement 1 und das hierzu parallel geschaltete zweite Federelement 2 gebildet wird, ein, als beim Zustand nach Fig.1a, bei dem das aktive Federungssystem alleine durch das erste Federelement 1 gebildet wird. Dies wird im folgenden anhand der **Figuren 1b, 1d** erläutert.

In den **Figuren 1b, 1d** sind für die einzelnen relevanten Federraten die Verläufe der Federkräfte F über dem jeweiligen Federweg s dargestellt. Der Federweg s verläuft dabei in den **Figuren 1a, 1c** in Vertikalrichtung vom Aufbau 11 zum Querlenker 12 hin, d.h. in Richtung der in diesen **Figuren 1a, 1c** ebenfalls eingezeichneten Gesamt-Kraft F_{ges}, die vom Aufbau 11 über die jeweils aktiven Federelemente (beim Zustand nach **Fig.1a** nur über das erste Federelement 1 und beim Zustand nach **Fig.1c** sowohl über das erste Federelement 1 als auch über das zweite Federelement 2) auf den Querlenker 12 übertragen wird. Mit "c1" ist dabei der Kraft-Weg-Verlauf für das erste Federelement 1 alleine gekennzeichnet, welches die Federrate c1 besitzt, und analog ist mit "c2" der Kraft-Weg-Verlauf für das zweite Federelement 2 alleine gekennzeichnet, welches die Federrate c2 besitzt. In **Fig.1d** ist weiterhin der Kraft-Weg-Verlauf des im Zustand nach **Fig.1c** aktiven Federungssystems, das durch das erste Federelement 1 und das hierzu parallel geschaltete zweite Federelement 2 gebildet ist, dargestellt und mit "(c1+c2)" bezeichnet, nachdem die Federrate dieses Federungsystems durch die Summe der Federraten c1 und c2 des ersten Federelements 1 und des zweiten Federelements 2 gebildet wird, wie im folgenden noch näher erläutert wird.

Das Kraft-Weg-Diagramm der **Fig.1b** ist dem Zustand nach **Fig.1a** zugeordnet, wobei ausdrücklich nur das erste Federelement 1 aktiv ist, nachdem in diesem Zustand das zweite Federelement 2 nicht eingespannt ist, da das Zugmittel 4 wie erläutert schlaff gehalten ist. Der Kraft-Weg-Verlauf "c1" des ersten Federelements 1 zeigt im Koordinatenursprung (Federweg s = 0) die Kraft F = 0 an, d.h. hier ist dieses erste in der Radaufhängung als Druckfeder fungierende Federelement 1 völlig entspannt. Im Ruhezustand des Fahrzeugs wirkt jedoch die Kraft F_{ges} vom Aufbau 11 auf dieses erste Federelement 1 ein, so dass dieses um die Wegstrecke s₁ komprimiert, d.h. eingefedert ist, wobei vom ersten Federelement 1 die positive Kraft F_{ges} eingeleitet wird.

Würde der Fahrzeug-Aufbau 11 anderweitig als über das erste Federelement 1 abgestützt, so würde dessen Federweg s den Wert "0" annehmen. Würde in diesem (fiktiven) Zustand mit dem Federweg s=0 das zweite als Zugfeder wirkende Federelement 2 gespannt, so würde dieses eine negative Zugkraft F_{Z} ausüben, die den Schnitt des Kraft-Weg-Verlaufes "c2" des zweiten Federelements 2 mit der Ordinate in **Fig.1b** bildet. Für eine völlige Entspannung des zweiten Federelements 2, die bei dessen Federweg s₂ eintritt und dem Schnittpunkt des Kraft-Weg-Verlaufes "c2" mit der Abszisse entspricht, müsste im ersten Federelement 1 die relativ große Kraft F_{E} wirken, d.h. vom Aufbau 11 müsste diese relativ große Kraft F_{E} (anstelle der Kraft F_{ges}) auf das erste Federelement 1 und auf das zweite Federelement 2 einwirken. Es sei jedoch nochmals ausdrücklich erwähnt, dass im Zustand nach **Fig.1a** nur die Kraft-Weg-Kennlinie "c1" im Diagramm nach **Fig.1b** relevant ist, da in diesem Zustand das zweite Federelement 2 nicht aktiviert ist.

Im Zustand nach **Fig.1c** hingegen ist das zweite Federelement 2 zwischen dem Aufbau 11 und dem Querlenker 12 (bzw. dem Rad 12*) eingespannt, d.h. nunmehr aktiv. Für diesen Zustand ist somit die mit "(c1 +c2)" gekennzeichnete Kraft-Weg-Kennlinie im Diagramm der **Fig.1d** relevant, die sich entsprechend der Addition der beiden Federraten c1, c2 durch graphische Addition der beiden einzelnen Kraft-Weg-Kennlinien "c1 und "c2" ergibt. Die Summen-Kennlinie "(c1+c2)" ist ebenso linear wie die einzelnen Federkennlinien "c1", "c2". Für den Federweg s=0 wirkt alleine die Kraft des zweiten Federelements 2, während für den Federweg s₂ bei entspanntem zweiten Federelement 2 nur das erste Federelement 1 wirkt. Diese beiden Punkte definieren die neue Gesamt-Kennlinie "(c1+c2)". Unverändert bleibt im Zustand nach **Fig.1c** selbstverständlich die im Ruhezustand des Fahrzeugs vom Aufbau 11 auf das durch die beiden Federelemente 1 und 2 gebildete Federungssystem übertragene Kraft F_{ges}, wobei wie ersichtlich ein um die bereits genannte Strecke Δh vergrößerter Federweg (s₁ + Δh) vorliegt.

Im übrigen kann die Tatsache, dass das als Zugfeder wirkende zweite Federelement 2 im durch das als Druckfeder wirkende erste Federelement 1 und das zweite Federelement 2 gebildeten Federungssystem eine höhere Federrate (c1+c2) erzeugt als bei alleinigem Wirken des ersten Federelements 1 vorliegt, auch mit einer Gewichtsentnahme aus dem Aufbau 11 erklärt werden, d.h. mit einer Herabsetzung der vom Aufbau 11 ausgeübten Kraft F_{ges}. Das durch eine solche "Gewichtsentnahme" entlastete erste, als Druckfeder wirkende Federelement 1 federt, wenn dieses alleine wirkt, entsprechend seiner Federrate c1 aus. Ist zusätzlich wie hier ein zweites als Zugfeder wirkendes Federelement 2 wirksam, so federt das erste Federelement 1 selbstverständlich um ein geringeres Maß aus d.h. die Federrate des durch die beiden Federelemente 1 und 2 gebildeten Federungssystems ist gestiegen.

Im Fahrwerk eines Fahrzeugs, d.h. in dessen Radaufhängung kann ein erfindungsgemäßes Federungssystem, das eine solche sog. Federraten-schaltung entsprechend der **Figuren 1a, 1c** ermöglicht, nun besonders wirksam eingesetzt werden, wenn die Federrate c2 des zweiten Federelements 2 betragsmäßig geringer ist als die Federrate c1 des ersten Federelements 1. Andernfalls ergäbe sich bei einer Zuschaltung des zweiten Federelementes 2 eine derart große Strecke Δh, um die der Fahrzeug-Aufbau 11 gegenüber dem Zustand, in dem nur das erste Federelement 1 wirksam ist, abgesenkt wird, dass dann bei geringsten zusätzlichen Einfederwegen s des ersten Federelements 1 und des zweiten Federelements 2 bspw. in Folge des Überfahrens von Bodenunebenheiten praktisch sofort das bereits genannte Druck-Zusatzfederelement in Eingriff käme. Dies hätte jedoch - wie eingangs bereits erläutert wurde - ein extrem hartes und daher unkomfortables Fahrwerk zur Folge und ist daher unerwünscht.

Vorzugsweise ist die Auslegung der Federraten und insbesondere der Federrate c2 des zweiten Federelements 2 so getroffen, dass im Rahmen des möglichen Einfederwegs des ersten Federelements 1 bis zum Zuschalten des Druck-Zusatzfederelementes 29 keine Entlastung des zweiten Federelementes 2 erfolgt, da sich andernfalls ein unstetiger und somit unerwünschter Kraft-Weg-Verlauf ergeben würde. In anderen Worten heißt dies, dass die Federrate c2 des zweiten Federelements 2 derart gewählt ist, dass das aktive zweite Federelement 2 bei einem Einfedern des Aufbaus 11 gegenüber dem Rad 12* zumindest solange aktiv bleibt, bis das Druck-Zusatzfederelement 29 aktiv ist.

Wenngleich bislang nur von einem zweiten Federelement 2 gesprochen wurde, welches in einer Fahrzeug-Radaufhängung einem ersten, als Tragfeder fungierenden Federelement 1 parallel geschaltet werden kann, so kann neben diesem zweiten Federelement 2 noch ein weiteres Federelement vorgesehen sein, das in vergleichbarer Weise zugeschaltet wird bzw. werden kann. Bspw. kann im Sinne einer vorteilhaften Weiterbildung der Erfindung das Zugmittel 4 selbst elastisch ausgelegt sein und somit als weiteres zusätzliches Federelement wirken, wobei dann eine Reihenschaltung des zweiten Federelements 2 und des durch das Zugmittel 4 gebildeten weiteren Federelementes vorliegt, wobei diese Reihenschaltung von zweitem Federelement 2 und Zugmittel 4 ihrerseits wie geschildert dem ersten Federelement 1, d.h. der Tragfeder parallel geschaltet ist.

Dies soweit zusammenfassend wird also zunächst vorgeschlagen, definiert einen (Betriebs)-Zustand einstellen zu können, in dem nur das erste Federelement 1, nämlich die Tragfeder alleine, und nicht das zweite oder weitere, diesem parallel schaltbare Federelement 2 wirksam wird. Damit ist eine Aktivierung des zuschaltbaren zweiten oder weiteren Federelements 2 in seiner Auswirkung besonders deutlich spürbar. Ferner wird für die Zuschaltung des zweiten oder weiteren Federelements 2 die Verwendung eines allgemeinen mechanischen Spannelementes vorgeschlagen, da ein solches einfach und dabei zuverlässig arbeitend gestaltet werden kann. Besonders vorteilhaft wird ein solches mechanisches Spannelement durch die Möglichkeit, den Fahrzeug-Aufbau 11 durch dieses mechanische Spannelement abzusenken oder alternativ auch anheben zu können, wenn zweite oder weitere Federelemente (2) zwischen dem Fahrzeug-Aufbau 11 und den Rädern 12* des Fahrzeugs vorgesehen sind. Vorzugsweise kann zusammen mit einem Zuschalten des zweiten oder weiteren Federelements 2 und somit einem härteren Einstellen des Fahrwerks ein Tieferlegen des Fahrzeug-Aufbaus 11 erfolgen, was für einen sportlichen Fahrbetrieb erwünscht ist. Ein Absenken des Fahrzeug-Aufbaus 11 kann aber auch nur zur Vereinfachung des Beladens oder Einstiegs durchgeführt werden, wobei hierfür eine Veränderung der Federcharakteristik nicht unbedingt erforderlich wäre.

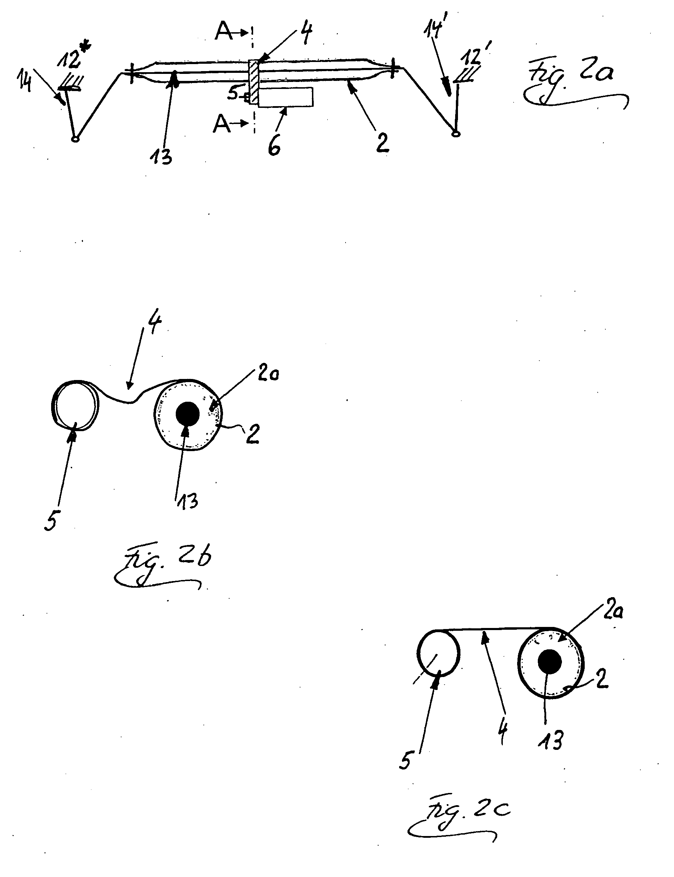

Abweichend von der anhand der **Figuren 1a, 1c** beschriebenen ersten Ausführungsform kann das erste Federelement 1 und/oder zweite bzw. weitere Federelement 2 als Verdreh-Federelement, bspw. als Drehstabfeder, ausgebildet sein. Ein bevorzugtes Ausführungsbeispiel mit einem als Drehstabfeder ausgebildeten zweiten Federelement 2 wird im weiteren anhand der **Figuren 2a - 2c** beschrieben, wobei **Fig.2a** stark vereinfacht die Aufsicht auf eine derartige Anordnung zeigt, während in den **Figuren 2b, 2c** jeweils der Schnitt A-A aus **Fig.2a** bei unterschiedlichen Zuständen dargestellt ist.

Zunächst auf **Fig.2a** Bezug nehmend ist mit der Bezugsziffer 13 ein wie üblich (ebenfalls) als Drehstabfeder ausgebildeter Querstabilisator bezeichnet, der in bekannter und üblicher Weise zwischen den beiden Rädern einer Fzg.-Achse eingespannt ist, und zwar über an seinen abgewinkelten freien Endabschnitten angelenkte Pendelstützen 14, 14'. Jede Pendelstütze ist am zugeordneten Rad 12* bzw. 12' (linkes bzw. rechtes Rad), genauer an deren Radträger, geeignet abgestützt. Mit seinem sich geradlinig erstreckenden Abschnitt zwischen den beiden demgegenüber abgewinkelten Endabschnitten ist der Querstabilisator 13 in nicht gezeigten Lagerstellen in üblicher Weise am bzw. gegenüber dem Fzg.-Aufbau (11), der in dieser Figur nicht dargestellt ist, verdrehbar gelagert. Ebenfalls nicht figürlich dargestellt sind die üblichen bspw. als Schraubendruckfedern ausgebildeten Tragfedern zwischen dem Fzg.-Aufbau (11) und den Fzg.-Rädern 12*, 12', die jeweils ein sog. erstes Federelement (1) im Sinne der vorliegenden Erfindung bilden.

Figürlich dargestellt ist jedoch ein zweites Federelement 2 sowohl für das linke Fzg.-Rad 12* bzw. dessen erstes Federelement als auch für das rechte Fzg.-Rad 12' bzw. dessen erstes Federelement. Dieses zweite Federelement 2 ist hier als rohrförmige Drehstabfeder (ebenfalls Bezugsziffer 2) ausgebildet und derart angeordnet, dass es/sie den Querstabilisator 13 in seinem sich geradlinig zwischen den abgewinkelten Endabschnitten erstreckenden Abschnitt umhüllt. Somit erstreckt sich dieses zweite Federelement 2 (ebenso wie der Querstabilisator 13) in Fzg.-Querrichtung zwischen den beiden Rädern 12*, 12', jedoch von diesen beabstandet, wobei diese rohrförmige Drehstabfeder 2 mit ihren beiden Enden am Querstabilisator 13 befestigt ist.

In Längsrichtung dieser rohrförmigen Drehstabfeder 2, d.h. in Fzg.-Querrichtung betrachtet ist mittig an diesem zweiten Federelement 2, d.h. in der Mitte der rohrförmigen Drehstabfeder 2, an dessen/deren Rohrwand außen ein Zugmittel 4 angebracht, das sich senkrecht zu deren Längsrichtung und somit in Längsrichtung des Fahrzeugs erstreckt. Dieses Zugmittel 4 ist mit seinem anderen Ende (analog **Fig.1a, Fig.1c**) auf einer von einem Elektromotor 6 in Drehbewegung versetzbaren Rolle 5 aufgewickelt, die bspw. über den Elektromotor 6 am figürlich nicht dargestellten Fzg.-Aufbau abgestützt ist. Mit einem Rotieren der Rolle 5 wird somit das freie Trum des Zugmittels 4 zwischen der Rolle 5 und dem zweiten Federelement 2 verkürzt oder verlängert, wobei ein Verkürzen des freien Trums des Zugmittels 4 aufgrund der Tatsache, dass das zweite Federelement 2, d.h. die rohrförmige Drehstabfeder 2 mit ihren Endabschnitten am Querstabilisator 13 befestigt ist, stets ein Tordieren des zweites Federelements 2 (= der rohrförmigen Drehstabfeder 2) hervorruft, wodurch diese(s) gespannt wird. Umgekehrt ruft ein Verlängern des freien Trums des Zugmittels 4 bei zunächst gespanntem zweiten Federelement 2 ein Entspannen desselben hervor. Dabei ist der vollständig entspannte Zustand des Federelements 2 in **Fig.2b** dargestellt, in der das schlapp durchhängende (und somit seinerseits ebenfalls nicht gespannte) Zugmittel 4 bzw. dessen zwischen dem Federelement 2 und der Rolle 5 befindliches Trum sichtbar ist. Beim Zustand nach **Fig.2c** hingegen ist dieses Trum und somit das Zugmittel 4 gespannt, wobei das als rohrförmige Drehstabfeder 2 ausgebildete Federelement 2 gegenüber dem Zustand nach **Fig.2b** durch das Zugmittel 4 um ca.90° mittig verdreht bzw. tordiert wurde, wie sich aus der unterschiedlich liegenden Markierung 2a ergibt.

Wenn nun das zweite Federelement 2 gemäß der Darstellung in **Fig.2c** gespannt ist, so wirkt dieses Federelement 2 parallel zu den genannten ersten Federelementen (1) der beiden Räder 12*, 12', nachdem das zweite Federelement 2 mittig quasi mit einem Ende über das durch das Zugmittel 4 sowie die Rolle 5 gebildete mechanische Spannelement am Fzg-Aufbau (11) abgestützt ist und mit dem linken bzw. rechten Ende jeweils über einen Teilabschnitt des Querstabilisators 13 sowie über die jeweilige Pendelstütze 14 bzw. 14' am jeweiligen Rad 12* bzw. 12' (genauer an deren Radträgern) abgestützt ist. Auf das jeweilige Fzg.-Rad 12* bzw. 12' bezogen wirkt dabei jeweils nur die Hälfte der rohrförmigen Drehstabfeder 2 als zweites Federelement 2, d.h. für das linke Rad 12* wirkt der linke sich vom Querstabilisator 13 bis zum Angriffspunkt des Zugmittels 4 erstreckende Abschnitt der rohrförmigen Drehstabfeder 2 und in vergleichbarer Weise wirkt für das rechte Rad 12' der rechte sich vom Querstabilisator 13 bis zum Angriffspunkt des Zugmittels 4 erstreckende Abschnitt der rohrförmigen Drehstabfeder 2.

Nachdem das zweite Federelement 2 bei dieser soweit erläuterten Konstruktion für das linke Rad 12* und für das rechte Rad 12' durch ein zusammenhängendes Bauteil, nämlich durch die besagte rohrförmige Drehstabfeder 2 gebildet wird, unterstützt diese rohrförmige Drehfeder 2 im nicht gespannten Zustand gemäß **Fig.2b** den Querstabilisator 13 in seiner Wirkung; im gespannten Zustand (und somit bei gespanntem Zugmittel 4 gemäß **Fig.2c**) hingegen wirkt die Drehsteifigkeit der Drehstabfeder 2 über die jeweilige Pendelstütze 14, 14' auf das Fahrwerk und zieht dabei den Fzg.-Aufbau (11) bspw. nach unten zur Fahrbahn hin, wobei die Stabilisatorfunktion des Querstabilisators 13 hiervon unberührt bleibt.

Nach einem vom soweit beschriebenen Ausführungsbeispiel abgewandelten (figürlich nicht dargestellten) Ausführungsbeispiel können anstelle der einstückigen rohrförmigen Drehstabfeder 2 zwei voneinander getrennte rohrförmige Drehstabfedern vorgesehen sein, indem abweichend vom beschriebenen Ausführungsbeispiel unterhalb des Zugmittels 4 eine Teilung der rohrförmigen Drehstabfeder 2 vorgesehen ist. Dann existiert also jeweils für sich eine linke, dem linken Rad 12* zugeordnete Hälfte, sowie eine rechte, dem rechten Rad 12' zugeordnete Hälfte und diese beiden Hälften der rohrförmigen Drehstabfeder (2) sind praktisch nur durch das bandförmige Zugmittel 4 im gespannten Zustand desselben miteinander verbunden.

Nicht sichtbar ist hier wegen der abstrahierten Darstellung ein weiteres mögliches (fakultatives) Merkmal, nämlich dass die Rohrwand der rohrförmigen Drehstabfeder 2 geschlitzt ausgeführt ist oder sein kann, und zwar einerseits, um eine gewünschte Federrate zu realisieren. Vorzugsweise kann dieser Schlitz zur Verringerung der auftretenden Spannungen schräg verlaufen. Ein solcher sich mit Ausnahme des Bereichs der nachträglichen Befestigungsstellen der rohrförmigen Drehstabfeder 2 am Querstabilisator 13 über der gesamten Länge der Drehstabfeder 2 im wesentlichen in Längsrichtung erstreckender Schlitz kann ferner dazu dienen, eine Montage der Drehstabfeder 2 auf dem Querstabilisator 13 zu ermöglichen.

Nach einem weiteren von der figürlichen Darstellung abweichenden Ausführungsbeispiel können zumindest zwei Zugmittel (4) seitlich sowie hinsichtlich ihrer Zugrichtung versetzt und insbesondere einander entgegengerichtet an der rohrförmigen Drehstabfeder 2 im Torsionssinn angreifen, wodurch mit diesen Zugmitteln (4) im wesentlichen alleinig Torsionskräfte in diese Drehstabfeder 2 eingeleitet werden, während deren Belastung auf Biegung hierdurch erheblich reduziert werden kann.

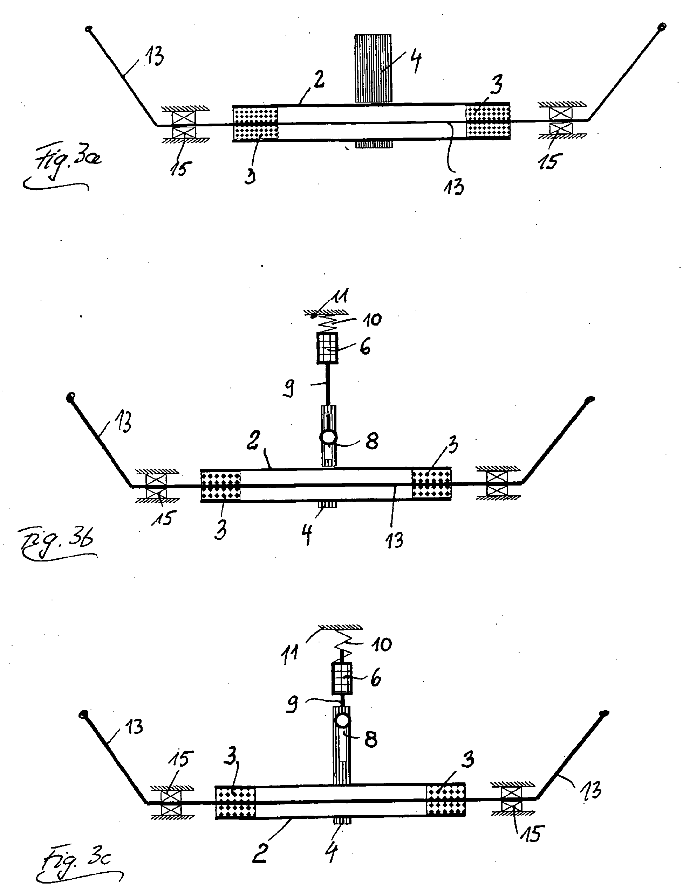

Ein weiteres mögliches Ausführungsbeispiel ist in den **Fig.3a, 3b, 3c** dargestellt. Abweichend vom Ausführungsbeispiel nach **Fig.2a** ist hier die rohrförmige Drehstabfeder 2 mit ihren Endabschnitten nicht direkt am Querstabilisator 13 befestigt, sondern es ist in diesen Bereichen linksseitig sowie rechtsseitig jeweils ein rohrförmiges Gummifederelement 3 zwischengeschaltet. Diese rohrförmigen Gummifederelemente 3, die an den Enden der rohrförmigen Drehstabfeder 2 zwischen dieser sowie dem Querstabilisator 13 eingespannt sind, wirken als Verdreh-Federelement und somit als weiteres, drittes Federelement, das bzw. die über das Zugmittel 4 zuschaltbar oder deaktivierbar ist bzw. sind. Abweichend von diesem Ausführungsbeispiel kann ein rohrförmiges Gummifederelement ähnlich der rohrförmigen Drehstabfeder selbstverständlich auch als zweites Federelement 2 wirken, wenn das Zugmittel 4 (bzw. allgemein ein mechanisches Spannelement) direkt an der Außenwand dieses rohrförmigen Gummifederelements, welches auf dem Querstabilisator 13 angeordnet ist, angreift. Im übrigen sind in diesen **Figuren 3a, 3b, 3c** die Lager des Querstabilisators 13 am Fahrzeug-Aufbau 11 dargestellt und mit der Bezugsziffer 15 gekennzeichnet.

Die **Figuren 3b, 3c** zeigen ferner eine Abwandlung der mechanischen Spannvorrichtung. Diese weist weiterhin ein am zweiten oder weiteren Federelement 2 angreifendes flexibles Zugmittel 4 in Form eines breiten Zugbandes auf, jedoch ist dieses über eine im entspannten Zustand eine ausreichende Freigängigkeit gewährleistende Freilaufeinrichtung 8 mit einer mittels des Stellmotors 6 verlagerbaren Spindel 9 verbunden. Diese Freilaufeinrichtung 8 ist wie figürlich dargestellt durch einen im Bereich des freien Endes des Zugmittels 4 vorgesehenen Längsschlitz (ebenfalls Bezugsziffer 8) gebildet, in dem das freie Ende der Spindel 9 derart in deren möglicher Bewegungsrichtung um eine gewisse Strecke bewegbar geführt ist, dass im entspannten Zustand dieses Zugmittels 4 gemäß **Fig.3b** keine Beeinträchtigung durch die oder Einschränkung der Drehbewegungen des Querstabilisators 13 auftreten kann, d.h. dass sich das Zugmittel 4 diesen folgend gegenüber der stillstehenden Spindel 9 ausreichend bewegen kann. Im gespannten Zustand hingegen, der in **Fig.3c** dargestellt ist, ist diese Freilaufeinrichtung 8 funktional blockiert, indem das freie Ende der Spindel 9 am Endanschlag des besagten Längsschlitzes 8 anliegt und dabei das Zugband bzw. Zugmittel 4 in Richtung zum Stellmotor 6 zieht.

Diese beiden Figuren zeigen ferner, dass das mechanische Spannelement selbst, und hier der Stellmotor 6 mit der Spindel 9, alternativ jedoch auch die weiter oben genannte Rolle 5 oder dgl. unter Zwischenschaltung eines weiteren Federelements 10 am Fahrzeug-Aufbau 11 befestigt sein kann. Dies ermöglicht eine zusätzliche Abstimmung oder Verstimmung der Steifigkeit des gesamten Federungssystems, wobei das weitere Federelement 10 mit dem zweiten Federelement 2 eine Reihenschaltung bildet und wobei diese Reihenschaltung von zweitem Federelement 2 und weiterem Federelement 10 ihrerseits wie geschildert dem nicht dargestellten ersten Federelement (1), d.h. den Tragfedern der hier nicht dargestellten Räder (12*, 12') parallel geschaltet ist.

Eine andere Ausführungsform der vorliegenden Erfindung entspricht der Darstellung von **Fig.3a**, jedoch ist abweichend von der obigen Erläuterung zu dieser Figur das Bauelement mit der Bezugsziffer 2 keine rohrförmige Drehstabfeder, sondern ein im wesentlichen torsionssteifes Rohr, das mit den beiden Gummifederelementen 3 drehfest verbunden ist. Wenn mittels des Zugbandes bzw. Zugmittels 4 das Rohr um den geradlinigen Abschnitt des Querstabilisators 13 verdreht wird, so werden hierdurch die beiden rohrförmigen Gummifederelemente 3 tordiert, welche hier alleine als Verdreh-Federelemente und jeweils als zweites Federelement im Sinne der vorliegenden Erfindung für das linke bzw. rechte (figürlich nicht dargestellte) Fahrzeug-Rad (12*. 12') wirken.

Im weiteren werden noch kurz Ergänzungen bzw. Ausführungsformen beschrieben, die nicht auf eines der soweit beschriebenen Ausführungsbeispiele beschränkt sind. So kann an einem zweiachsigen Fahrzeug ein entsprechendes erfindungsgemäßes Federungssystem mittels eines einzigen Stellmotors (vgl. Bezugsziffer 6 in **Fig.2a**) für mehrere den einzelnen Achsen bzw. Rädern zugeordnete mechanische Spannelemente betrieben werden, wenn bspw. (unter Bezugnahme auf das Ausführungsbeispiel nach **Fig.2a**) ein der Fzg.-Vorderachse zugeordnetes Zugmittel 4 und ein der Fzg.-Hinterachse zugeordnetes Zugmittel 4 jeweils bspw. in den Bereich der Fahrzeugmitte geleitet werden, wo dieser einzige Stellmotor 6 für die beiden Rollen 5 der beiden Zugmittel 4 am Unterboden des Fzg.-Aufbaus 11 befestigt sein kann. Im Sinne einer vorteilhaften Funktionsvereinigung kann abweichend von den Ausführungsbeispielen nach **Fig.2a** und **Fig.3**, jedoch unter Anwendung von deren Grundprinzip der Querstabilisator 13 selbst als zweites Federelement 2 fungieren, wenn - ohne die erläuterte rohrförmige Drehstabfeder (2) vorzusehen - das Zugmittel 4 in vergleichbarer Weise direkt am Querstabilisator 13 vorzugsweise mittig an dessen sich geradlinig zwischen den beiden abgewinkelten Endabschnitten erstreckenden Abschnitt angreift.

Es wurde bereits erwähnt, dass ein erfindungsgemäßes Federungssystem solchermaßen gestaltet bzw. ausgelegt sein kann, dass mit Aktivieren des zweiten Federelements 2 der Fzg.-Aufbau 11 zur Fahrbahn hin nach unten gezogen wird. Ein härteres Fahrwerk aufgrund des zweiten Federelements wird hierdurch vorteilhafterweise mit einem Tieferlegen des Fzg.-Aufbaus verbunden. Insbesondere kann vorgesehen sein, dass der Fahrer hierbei individuell zwischen einem hartem und einem weichem Fahrwerk wählen kann, wobei zusätzlich zur unterschiedlichen Federraten-Schaltung auch eine parallele Veränderung der Dämpfungscharakteristik über unterschiedlich einstellbare Verstelldämpfer im Hinblick auf eine optimale Auslegung vorgesehen sein kann. Ein Tieferlegen des Fzg.-Aufbaus kann jedoch auch als Beladungshilfe eingesetzt werden und insbesondere dann erfolgen, wenn der Kofferraumdeckel oder die Heckklappe des Fahrzeugs geöffnet wird. Mit Schließen des Deckels oder der Klappe kann der Fzg.-Aufbau dann wieder angehoben werden. Vorteilhafterweise kann ein Elektromotor, der zum Öffnen der Klappe vorgesehen ist, gleichzeitig geeignet mechanisch mit dem erfindungsgemäßen mechanischen Spannelement (beispielsweise mit der genannten Rolle 5 desselben) verbunden sein, derart, dass mit einem Öffnen der Heckklappe ausgelöst durch diesen Motor gleichzeitig ein Tieferlegen des Fzg.-Aufbaus erfolgt.

Was die hier vorgestellte sog. Federraten-Schaltung betrifft, so kann die Auslegung jedoch auch entgegengesetzt zu der im vorhergehenden Absatz erläuterten sein, d.h. dass ein erfindungsgemäßes Federungssystem für einen Beladungsausgleich genutzt werden kann, in dem Sinne, dass mit zunehmender Beladung der sich hierdurch absenkende Fzg.-Aufbau angehoben wird, wobei noch darauf hingewiesen sei, dass eine Vielzahl weiterer Details durchaus abweichend von obigen Erläuterungen gestaltet sein kann, ohne den Inhalt der Patentansprüche zu verlassen.

## Patentansprüche

1. Federungssystem für eine Fahrzeug-Radaufhängung mit einem ersten letztlich zwischen dem Fahrzeug-Aufbau (11) und einem Fahrzeug-Rad (12*, 12') eingespannten ersten Federelement (1) und einem zweiten oder weiteren durch Einleiten einer Kraft oder eines Moments mittels eines mechanischen Spannelements (4, 5, 6) letztlich zwischen dem Fahrzeug-Aufbau (11) und dem Fahrzeug-Rad (12*) einspannbaren Federelement (2, 3), das somit dem ersten Federelement (1) parallel geschaltet werden kann, während dieses weitere Federelement (2, 3) ohne in das System eingeleitete Kraft oder eingeleitetes Moment nicht aktiv ist,
und weiterhin mit einem Druck-Zusatzfederelement (29), das bei großen Federwegen des ersten Federelements (1) über einen Anschlag aktiv wird,
**dadurch gekennzeichnet dass** das Einleiten der Kraft oder des Moments zum Aktivieren des zweiten oder weiteren Federelements (2, 3) das Druck-Zusatzfederelement (29) nicht aktiviert,
entweder indem die Federrate (c2) des zweiten oder weiteren Federelements (2) geringer ist als die Federrate (c1) des ersten Federelements (1), oder indem die Federrate (c2) des zweiten oder weiteren Federelements (2) derart gewählt ist, dass das aktive zweite oder weitere Federelement (2) bei einem Einfedern des Aufbaus (11) gegenüber dem Rad (12*) zumindest solange aktiv bleibt, bis das Druck-Zusatzfederelement (29) aktiv ist.

2. Federungssystem nach Anspruch 1,
**dadurch gekennzeichnet, dass** das mechanische Spannelement durch ein am zweiten oder weiteren Federelement (2, 3) angreifendes flexibles Zugmittel (4) und einen dieses Zugmittel (4) verkürzenden oder verlängernden Stellmotor (6) gebildet ist.

3. Federungssystem nach Anspruch 1 oder 2,
**dadurch gekennzeichnet, dass** verschiedenen Rädern oder Achsen des Fahrzeugs zugeordnete zweite oder weitere Federelemente (2, 3) mittels eines gemeinsamen Stellmotors (6), der mehrere Zugmittel (4) verkürzen oder verlängern kann, aktivierbar bzw. deaktivierbar sind.

4. Federungssystem nach einem der vorangegangenen Ansprüche,
**dadurch gekennzeichnet, dass** das flexible Zugmittel (4) durch Aufwickeln auf eine Rolle (5) oder dgl. verkürzbar bzw. durch Abwickeln von der Rolle (5) oder dgl. verlängerbar ist.

5. Federungssystem nach einem der vorangegangenen Ansprüche,
**dadurch gekennzeichnet, dass** das Zugmittel (4) über eine im entspannten Zustand eine ausreichende Freigängigkeit gewährleistende Freilaufeinrichtung (8) mit einer mittels eines Stellmotors (6) verlagerbaren Spindel (9) verbunden ist.

6. Federungssystem nach einem der vorangegangenen Ansprüche,
**dadurch gekennzeichnet, dass** das Zugmittel (4) selbst elastisch ausgelegt ist und somit als weiteres Federelement wirken kann.

7. Federungssystem nach einem der vorangegangenen Ansprüche,
**dadurch gekennzeichnet, dass** das mechanische Spannelement (5, 6) unter Zwischenschaltung eines weiteren Federelements (10) am Fahrzeug-Aufbau (11) befestigt ist.

## Claims

1. A suspension system for a vehicle wheel suspension, comprising a first spring element (1) finally clamped between the vehicle body (11) and a vehicle wheel (12*, 12') and a second or further spring element (2, 3) which can be finally clamped between the vehicle body (11) and the vehicle wheel (12*) by introducing a force or torque by means of a mechanical tensioning element (4, 5, 6), and which can therefore be connected in parallel with the first spring element (1), while this further spring element (2, 3) is not active without a force introduced into the system or an introduced torque, and further comprising a pressure-additional spring element (29), which becomes active on large spring excursions of the first spring element (1) via a stop, **characterised in that** the introduction of the force or torque to activate the second or further spring element (2, 3) does not activate the pressure-additional spring element (29), either **in that** the spring rate (c2) of the second or further spring element (2) is lower than the spring rate (c1) of the first spring element (1), or **in that** the spring rate (c2) of the second or further spring element (2) is selected such that the active second or further spring element (2) during a compression of the vehicle body (11) relative to the wheel (12*) at least remains active until the pressure-additional spring element (29) is active.

2. A suspension system according to claim 1, **characterised in that** the mechanical tensioning element is formed by a flexible tension device (4) engaging on the second or further spring element (2, 3) and a servomotor (6) shortening or lengthening this tension device (4).

3. A suspension system according to claim 1 or 2, **characterised in that** second or further spring elements (2, 3) associated with various wheels or axles of the vehicle can be activated or deactivated by means of a common servomotor (6), which can shorten or lengthen a plurality of tension devices (4).

4. A suspension system according to any one of the preceding claims, **characterised in that** the flexible tension device (4) can be shortened by winding onto a reel (5) or the like and can be lengthened by unwinding from the reel (5) or the like.

5. A suspension system according to any one of the preceding claims, **characterised in that** the tension device (4) is connected to a spindle (9) which can be displaced by means of a servomotor (6) by a free-running device (8) ensuring adequate free-running in the relaxed state.

6. A suspension system according to any one of the preceding claims, **characterised in that** the tension device (4) is itself elastic and can therefore act as a further spring element.

7. A suspension system according to any one of the preceding claims, **characterised in that** the mechanical tensioning element (5, 6) is fastened with the interposition of a further spring element (10) to the vehicle body (11).

## Revendications

1. Système de suspension de roue de véhicule comportant un premier élément de ressort (1) monté directement ou indirectement entre la carrosserie (11) du véhicule et une roue (12*, 12') du véhicule ainsi qu'un second ou autre élément de ressort (2, 3) monté directement ou indirectement entre la carrosserie (11) et la roue (12*), par l'application d'une force ou d'un moment par l'intermédiaire d'un élément de serrage mécanique (4, 5, 6), ce second élément de ressort étant ainsi monté en parallèle avec le premier élément de ressort (1) alors que cet autre élément de ressort (2, 3) n'est pas actif sans force ou couple appliqué au système, et
en outre, un élément de ressort de compression (29) complémentaire, qui pour des courses importantes du premier élément de ressort (1) devient actif par une venue en butée,
**caractérisé en ce que**
l'application de la force ou du moment pour activer le second ou autre élément de ressort (2, 3) n'active pas l'élément de ressort de compression (29) complémentaire, soit **en ce que** la rigidité (c2) du second ou autre élément de ressort (2) est inférieure à la rigidité (c1) du premier élément de ressort (1) soit que la rigidité (c2) du second ou autre élément de ressort (2) est choisie pour que le second ou autre élément de ressort (2), actif, reste actif lors du mouvement de rentrée de la carrosserie (11) par rapport à la roue (12*), au moins jusqu'à ce que l'élément de ressort de compression complémentaire (29) soit actif.

2. Système de suspension selon la revendication 1,
**caractérisé en ce que**
l'élément de serrage mécanique, est constitué par un moyen de traction souple (4) appliqué au second ou autre élément de ressort (2, 3) et par un moteur d'actionneur (6) qui raccourcit ou rallonge ce moyen de traction (4).

3. Système de suspension selon la revendication 1 ou 2,
**caractérisé en ce que**
les seconds ou autres éléments de ressort (2, 3) associés à différentes roues ou essieux du véhicule, sont activés ou neutralisés par un moteur d'actionneur (6), commun, permettant d'allonger ou de raccourcir plusieurs moyens de traction (4).

4. Système de suspension selon les revendications précédentes,
**caractérisé en ce que**
le moyen de traction souple (4) est raccourci par son enroulement sur un rouleau (5) ou analogue et est allongé par son dévidage du rouleau (5) ou analogue.

5. Système de suspension selon les revendications précédentes,
**caractérisé en ce que**
le moyen de traction (4) est relié par une installation de roue libre (8) garantissant une liberté de fonctionnement suffisante en position de détente, avec une broche (9) réglée par un moteur d'actionneur (6).

6. Système de suspension selon les revendications précédentes,
**caractérisé en ce que**
le moyen de traction (4) est lui-même élastique et fonctionne ainsi comme autre élément élastique.

7. Système de suspension selon les revendications précédentes,
**caractérisé en ce que**
l'élément de serrage mécanique (5, 6) est fixé à la carrosserie (11) du véhicule avec interposition d'un autre élément de ressort (10).
